(19) Europäisches Patentamt
European Patent Office
Office européen des brevets

(11) **EP 2 000 678 A2**

(12) **EUROPEAN PATENT APPLICATION**
published in accordance with Art. 153(4) EPC

(43) Date of publication:
**10.12.2008 Bulletin 2008/50**

(51) Int Cl.:
***F16B 5/02*** *(2006.01)*      ***F16B 19/02*** *(2006.01)*

(21) Application number: **07730360.0**

(22) Date of filing: **07.03.2007**

(86) International application number:
**PCT/ES2007/000119**

(87) International publication number:
**WO 2007/110455 (04.10.2007 Gazette 2007/40)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **24.03.2006 ES 200600684 U**

(71) Applicant: **Petri Larrea, Guillermo
31002 Pamplona (ES)**

(72) Inventor: **Petri Larrea, Guillermo
31002 Pamplona (ES)**

(74) Representative: **Garcia-Cabrerizo y del Santo, Pedro Maria
Oficina Garcia Cabrerizo, S.L.,
Vitruvio, 23
28006 Madrid (ES)**

(54) **VARIABLE-DIAMETER CUTTING AND TENSIONING BOLT**

(57) A tapered male bolt (1) that presents a frustoconical surface area (8) which adapts to the frustoconical inner surface area of a tapered female bushing (2), provided with axial slots (3), open alternately on each side, and whose coupling means are appropriate for inserting the tapered male bolt (1) into the tapered female bushing (2), in such a way that the latter's outside diameter is expanded to achieve a tight fit in the holes of the parts to be joined (9), thereby successfully lightening the weight of joints and, consequently, that of the structures of which they form part.

**FIG. 3**

EP 2 000 678 A2

**Description**

The present invention refers to a shear and draw bolt which, being of adjustable diameter, may fit tightly into holes of the parts to be joined, thus reducing the number and/or diameter of the coupling elements. Use of the bolts of the invention successfully decreases the weight of joints and, thereby, that of the structures of which they form part. Another advantage is that the machining jobs are fewer (fewer drill holes) with the consequent economic saving and greater ease of assembly, so that the time of this is shortened and its cost lowered.

Its application is indicated in any joint, both of structures and of machine components, replacing to advantage in general terms, bolts, screws, rivets, clinches, pins, and so on, due to the fact that they are not only under shearing stress but also in tension.

To date, joints have been made with screws, clinches, rivets, pins, and so forth, which have to absorb the stresses generated in them. These are:

- Shearing stress
- Tensile stress
- Thrust or crushing stress

Depending on the applications, the materials and their dimensions, as well as on the magnitude of the stresses that the joint has to withstand, this is resolved by means of one or more of the above-mentioned types of mechanical elements.

The joint is usually designed with a ratio between the diameter of the bolts and the thickness of the plates, such that the bolts needed may be approximately the same in accordance with the hypothesis that failure of the joint may occur because of crushing or shear.

If the shear stresses are very high and we choose screws or clinches, we will have to install a large number of these or else fit large-sized ones, with the resultant difficulty of clinching or the application of high torques so that the screws are left in tension. At present, a solution to this problem is the combined installation of screws and pins. The pins may be fitted by deformation (milled) or by pressure (spring), and the screws by applying a torque.

If the pins are smaller in diameter than the holes, in order to make the calculations, it has to be taken into account that the admissible thrust or crushing stresses are lower as the hole is not completely filled. In screws these admissible stresses are even lower as the difference between the hole and the screw is usually larger than in the solution with pins. In the event of shear failure, the existence of clearance may lead to unwanted events, such as the flexing of the joint. This leads to the choice of lower calculation values for joints with clearance.

Thus, the admissible shear stress will be:

$$\zeta_{adm} = \beta\,\sigma_i$$

where $\sigma_i$ is the strength of the steel and values of 0.80 are usually accepted for $\beta$ in tight fitting bolts and 0.65 for bolts with a clearance of 1 mm.

The admissible compression stress will be:

$$\sigma_{o\,adm} = \alpha\,\sigma_u$$

where $\sigma_u$ is the strength for the plate and values of 2 are usually accepted for bolts with clearance and 2.5 for bolts with no clearance (calibrated).

From the foregoing we may deduce the obvious interest in using pins or bolts with no clearance. However, the fitting of conventional pins by deformation or elasticity calls for considerable forces to be applied, so that this option is usually discarded due to the difficulty of fitting and removal of these in normal conditions, as the jigs and tools required for this operation are extremely complex and require a high level of skill on the part of operators. Similarly, these fitting and removal operations entail a risk for the operators who perform them. The solution occasionally used of fitting screws with sufficient preload to absorb the shear loads by way of the friction coefficient of the steels employed in the joint introduces some uncertainty as to the performance of the joint over time.

An aim of the present invention is to make bolts available which, while in pure shear stress, can be used as spring pins, susceptible to be fitted and removed easily and repeatedly.

The other aim of the present invention is to make bolts available which, while in shear stress, can also be used as draw bolts.

The solution proposed consists of using a tapered male bolt that presents a frustoconical surface and a tapered female bushing, provided with axial slots open alternately on each side of the bushing and whose lower frustoconical surface area adapts to that of the tapered male bolt. Finally, the use of coupling means enables the male bolt to be inserted into the female bushing, bringing about an expansion in the latter's outside diameter.

The above-mentioned coupling means may vary considerably depending on the design specifications of the joint, and they may consist of nuts, screws, preformed hexagonal heads, etc.

In addition, means may be provided for retaining the axial movements of the tapered female bushing, so this may incorporate a perimeter flange or else it may be fitted with a step by way of a stop in the hole of the parts to be joined.

The bolt of the invention may also be provided with pulling means that enable it to act as a draw bolt, pressing the parts to be joined against one another.

The advantages of the bolt of the invention stem from the fact that its use in shearing joints and in joints subject to high shear stress may dispense with the fitting of draw bolts, besides ensuring that in those in which they are used only the other stresses have to be absorbed, with the reduction of the number of these and of their dies, thereby making the joints lighter and facilitating installation, as the holes are smaller and the bolt tightening torques lower too. Lastly, we have to take into account the cost and time saving that they bring, as fewer holes have to be made at each joint.

To supplement the foregoing description and in order to assist in a clearer understanding of the features of the invention, a detailed description will be provided of a preferred embodiment on the basis of a set of drawings appended to this report, wherein for purely informative and non-restrictive purposes we have represented the following:

Figure 1 shows a view of the tapered male bolt.
Figure 2 shows a semi-sectional view of the tapered female bushing.
Figure 3 shows a semi-sectional view of the assemblage of a first version.
Figure 4 shows a semi-sectional view of the assemblage of a second version.
Figure 5 shows a semi-sectional view of the tapered female bushing provided with a retaining flange.
Figure 6 shows a semi-sectional view of the assemblage of a third version.
Figure 7 shows a semi-sectional view of the assemblage of a fourth version.
Figure 8 shows a semi-sectional view of the assemblage of a fifth version.

In the above figures, the numerical references refer to the following parts and elements:

1.- Tapered male bolt
2.- Tapered female bushing
3.- Axial slots
4.- Nut
5.- Washers
6.- Outer threading
7.- Cylindrical end
8.- Frustoconical area
9.- Parts to be joined
10.- Inner hexagonal head
11.- Threaded housing
12.- Stop
13.- Flange
14.- Inner threading
15.- Bolt

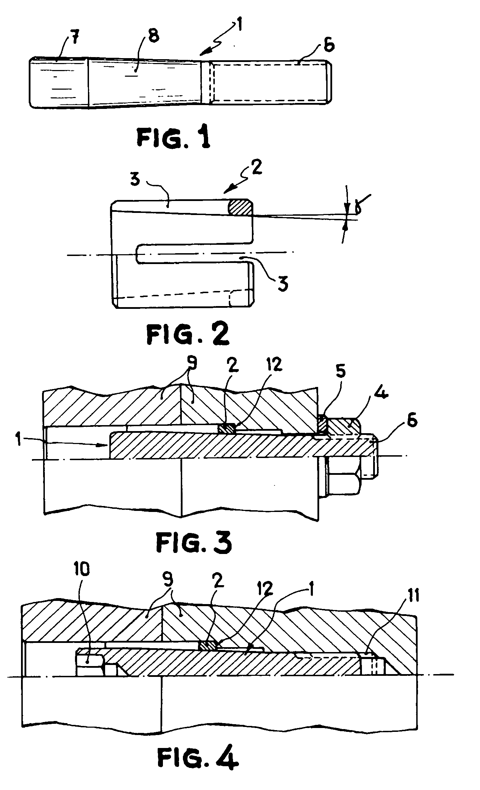

As may be seen in figures 1 to 3, which refer to a first version, the device of the invention consists of a tapered male bolt (1), which presents a frustoconical surface area (8), terminating in a cylindrical end (7) matching up with its larger diameter side, on which there is fitted a tapered female bushing (2) whose inner surface presents the same conicity $\gamma$ as the outer surface of the tapered male bolt (1) and a series of axial slots (3), open alternately on each side of the bushing. The tightening of the tapered male bolt (1) against the tapered female bushing (2), and as a result the expansion of the latter's outside diameter, is done by coupling means, consisting in this first version of a nut (4) which rests against one of the parts to be joined (9) by way of a washer (5) and engages in an outer thread (6) presented for these purposes by the tapered male bolt (1) matching up with the smaller-diameter side of the frustoconical surface area (8).

In a second version, at its cylindrical end the tapered male bolt (1) presents an inner hexagonal head (10) and its threaded end (6) engages in a threaded housing (11) presented by one of the parts to be joined (9). In this way, when the tapered male bolt (1) is turned with a spanner, the tapered female bushing (2) is expanded as it is prevented from moving along the parts to be joined (9) by a stop (12). Unlike what happened in the previous execution, in this version there is a relative rotary movement between the tapered male bolt (1) and the tapered female bushing (2), but in compensation the nut (4) disappears from the outside of the coupling. See figure 4.

In a third version the stop (12) is dispensed with and it is replaced by means for retaining the tapered female bushing (2), which, in this case, presents a flange (13) that engages with a bevel on the respective part to be joined (9).

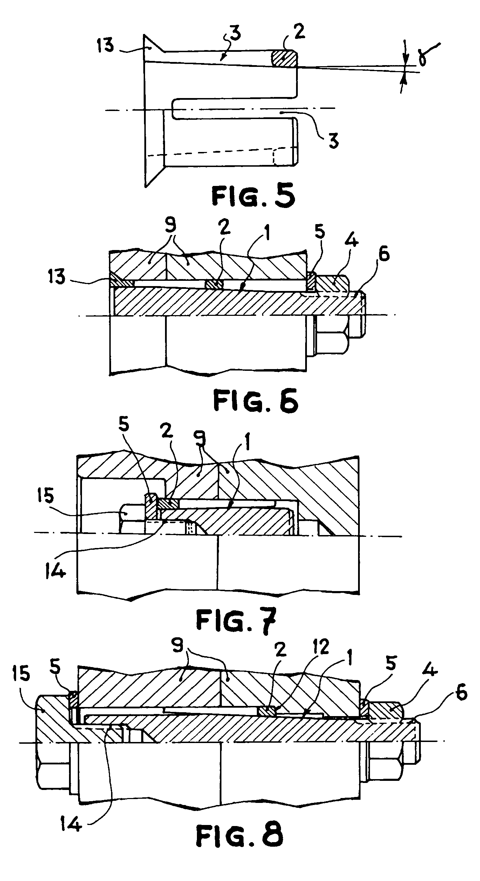

In this arrangement a tightening takes place between the parts to be joined (9), forming a combination of shear pin and draw bolt. Note that the tensile stress is related in a fixed manner to the expansion stress, as there is only one nut (4) making up the coupling means. See figure 6.

In a fourth version the outer threading (6) is replaced by an inner threading (14) at the cylindrical end (7) of the tapered bolt (1). The coupling means are composed of a screw (15), which engages in the inner threading (14) and rests on the tapered female bushing (2) by way of a washer (5). In this arrangement pure expansion of the outside diameter of the tapered female bushing (2) takes place and there is no relative rotation between this and the tapered male bolt (1). Tightening between the parts to be joined (9) does not take place either. See figure 7.

In a fifth version the basic arrangement of the first version is taken up again but, for the purpose of adding a tightening stress between the parts to be joined (9), a screw (15) is provided that applies pressure by way of a washer (5) and engages in an inner threading (14) presented by the cylindrical end of the tapered male bolt (1). In this way, the pulling screw effect is separated from the shear pin effect, as we have two different adjusting elements: the nut (4) and the screw (15).

As explained above, the bolt of the invention is designed for any simple or combined shear application or joints with a high shearing stress. It may also be used as an insertable and removable spring pin. The different designs described are defined in their sizing by the specific application and their mechanical stresses. They may also be designed and sized by standardizing dimensions and loads to be borne for specific applications, as their use is universal.

They may have an application either in movement transmissions or static applications, such as those that are listed by way of example below:

- Crane crown wheels, aerogenerators, capital goods.
- Car and truck torque drives
- Tubular flange joint structures
- Structural joints
- Spring pins
- Wedges and cotters
- Applications where the friction calculation is extreme
- Large drive plate torque transmissions (eliminates weights and low inertias, increasing the speed to achieve maximum performance).
- Elimination of compression screws.

The tapered female bushing may be designed in accordance with the application and calculations, always with a view to its anchorage in the joint and its best deformation:

- With slots, openings, angles, knurled and milled edges, etc of different designs.
- With different lengths and thicknesses, as well as material qualities, hardnesses, anticorrosion treatments, lubricant treatment, heat treatments, etc.
- In different materials (steels, polyamides, technical plastics, aluminium, bronze and/or any material that may be applied to perform the function) and
- With different ductile, malleable, elastic, plastic, etc. characteristics

The bolt is also designed in accordance with the application and the calculations of this and with a view to optimum performance and ease of fitting, with different design options (knurling, milling, etc.)

The tips may be finished with different threads, different kinds of head (hexagonal, Allen, socket, slotted, etc.) according to international nut and bolt standards options and their applications.

The materials to be used shall always be those that assure the mechanical response to the demands of the joint. These materials may have different heat treatments, hardnesses, surface, anticorrosion, lubricant, self-locking, etc. treatments.

The dimensions and shapes of the bolt will depend on the joint calculations and designs.

## Claims

1. Variable diameter shear and draw bolt of the type used for coupling various parts to be joined (9), **characterised in that** it comprises:

    - a tapered male bolt (1) which presents a frustoconical surface area (8)
    - a tapered female bushing (2) provided with axial slots (3), open alternately on each side, with a frustoconical inner surface area that adapts to the frustoconical surface area (8) of the tapered male bolt (1)
    - coupling means, appropriate for inserting the tapered male bolt (1) into the tapered female bushing (2), in such a way that the latter's outside diameter is expanded.

2. Variable diameter shear and draw bolt according to claim 1, **characterised in that** it comprises means for retaining the tapered female bushing (2), in such a way that its axial movement is prevented when the coupling means are actuated.

3. Variable diameter shear and draw bolt according to claim 1, **characterised in that** the tapered male bolt (1) incorporates a cylindrical end (7) matching up with the larger diameter side of the frustoconical surface area (8).

4. Variable diameter shear and draw bolt according to claim 2, **characterised in that** the coupling means comprise a nut (4) that rests on one of the parts to be joined (9) by way of a washer (5) and engages in an outer threading (6), presented for these purposes by the tapered male bolt (1) matching up with the smaller diameter side of the frustoconical surface area (8); and **in that** the retaining means comprise a stop (12).

5. Variable diameter shear and draw bolt according to claim 2, **characterised in that** the coupling means comprise an inner hexagonal head (10) disposed at the cylindrical end (7) of the tapered male bolt (1) and an outer threading (6) that engages in a threaded housing (11) presented by one of the parts to be joined (9); and the retaining means are composed of a stop (12) against which the tapered female bushing (2) rests.

6. Variable diameter shear and draw bolt according to claim 2, **characterised in that** the coupling means comprise a nut (4) which rests on one of the parts to be joined (9) by way of a washer (5) and engages in an outer threading (6) presented for these purposes by the tapered male bolt (1) matching up with the smaller diameter side of the frustoconical surface area (8); and the retaining means comprise a flange (13) disposed on the tapered female bushing (2).

7.  Variable diameter shear and draw bolt according to claim 1, **characterised in that** the coupling means comprise a screw (15) which rests by way of a washer (5) on the tapered female bushing (2) and which engages in an inner threading (14) presented for these purposes by the tapered male bolt (1) matching up with the larger diameter side of its frustoconical surface area (8).

8.  Variable diameter shear and draw bolt according to claim 2, **characterised in that** the coupling means comprise a nut (4) which rests on one of the parts to be joined (9) by way of a washer (5) and engages in an outer threading (6) presented for these purposes by the tapered male bolt (1) matching up with the smaller diameter side of the frustoconical surface area (8) and by a screw (15), which rests on another part to be joined (9) by way of a washer (5) and engages in an inner threading (14) presented by the tapered male bolt (1) matching up with the larger diameter side of its frustoconical surface area (8); and the coupling means are composed of a stop (12) presented by one of the parts to be joined (9) and against which the tapered female bushing (2) rests.

FIG. 1

FIG. 2

FIG. 3

FIG. 4

FIG. 5

FIG. 6

FIG. 7

FIG. 8